(19) Europäisches Patentamt

European Patent Office

Office européen des brevets

(11) **EP 1 274 776 B1**

(12) **EUROPÄISCHE PATENTSCHRIFT**

(45) Veröffentlichungstag und Bekanntmachung des Hinweises auf die Patenterteilung:
**21.09.2005 Patentblatt 2005/38**

(21) Anmeldenummer: **01905664.7**

(22) Anmeldetag: **11.01.2001**

(51) Int Cl.⁷: **C08J 5/18**, B29D 7/01, B32B 27/18, C08J 3/22

(86) Internationale Anmeldenummer:
**PCT/EP2001/000276**

(87) Internationale Veröffentlichungsnummer:
**WO 2001/053396 (26.07.2001 Gazette 2001/30)**

(54) **WEISSE, FLAMMHEMMEND AUSGERÜSTETE FOLIE AUS EINEM KRISTALLISIERBAREN THERMOPLASTEN, VERFAHREN ZU IHRER HERSTELLUNG UND VERWENDUNG**

WHITE FLAME-PROOFED THERMOFORMABLE ORIENTED FILM MADE FROM A CRYSTALLISABLE THERMOPLASTIC, A METHOD FOR PRODUCTION AND THE USE THEREOF

FEUILLE BLANCHE, IGNIFUGEE, CONSTITUEE D'UNE MATIERE THERMOPLASTIQUE CRISTALLISABLE, SON PROCEDE DE PRODUCTION ET SON UTILISATION

(84) Benannte Vertragsstaaten:
**DE FR GB IT LU**

(30) Priorität: **20.01.2000 DE 10002180**

(43) Veröffentlichungstag der Anmeldung:
**15.01.2003 Patentblatt 2003/03**

(73) Patentinhaber: **Mitsubishi Polyester Film GmbH 65203 Wiesbaden (DE)**

(72) Erfinder:
• **MURSCHALL, Ursula 55283 Nierstein (DE)**
• **OBERLÄNDER, Klaus 65207 Wiesbaden (DE)**
• **CRASS, Günther 65232 Taunusstein (DE)**
• **KERN, Ulrich 55218 Ingelheim (DE)**

(74) Vertreter: **Schweitzer, Klaus et al Patentanwaltskanzlei Zounek, Industriepark Kalle-Albert, Gebäude H391 Rheingaustrasse 190-196 65174 Wiesbaden (DE)**

(56) Entgegenhaltungen:
**GB-A- 2 344 596**

• **"ADDITIVES" PLASTICS ENGINEERING,SOCIETY OF PLASTICS ENGINEERS,INC. GREENWICH, CONN,US, Bd. 55, Nr. 6, Juni 1999 (1999-06), Seiten 32-38, XP000998046 ISSN: 0091-9578**
• **"FLAMMSCHUTZADDITIVE DER CONSTAB POLYMER-CHEMIE" GUMMI, FASERN, KUNSTSTOFFE. INTERNATIONALE FACHZEITSCHRIFT FUR DIE POLYMER-VERARBEITUNG,GENTNER VERLAG. STUTTGART,DE, Bd. 48, Nr. 10, Oktober 1995 (1995-10), Seiten 695-697, XP000993091 ISSN: 0176-1625**
• **PATENT ABSTRACTS OF JAPAN vol. 1995, no. 07, 31. August 1995 (1995-08-31) & JP 07 101011 A (TORAY IND INC), 18. April 1995 (1995-04-18)**

**Beschreibung**

Die Erfindung betrifft eine weiße, flammhemmend ausgerüstete, thermoformbare orientierte Folie aus einem Thermoplasten, deren Dicke im Bereich von 10 µm bis 350 µm liegt. Die Folie enthält mindestens ein Weißpigment, ein Flammschutzmittel und zeichnet sich durch sehr gute optische und mechanische Eigenschaften sowie durch eine gute Verstreckbarkeit und Thermoformbarkeit und eine wirtschaftliche Herstellung aus. Die Erfindung betrifft ferner ein Verfahren zur Herstellung dieser Folie und ihre Verwendung.

Weiße Folien aus kristallisierbaren Thermoplasten mit einer Dicke zwischen 10 µm und 350 µm sind hinreichend bekannt.

Diese Folien sind nicht flammhemmend ausgerüstet und nicht thermoformbar, so dass sich weder die Folien noch die daraus hergestellten Artikel für Anwendungen eignen, wo Brandschutz bzw. Schwerentflammbarkeit und wo Thermoformbarkeit gefordert sind.

In der DE A 2346 787 ist ein schwerentflammbarer Rohstoff beschrieben. Neben dem Rohstoff ist auch die Verwendung des Rohstoffs zu transparenten Folien und Fasern beansprucht.

Bei der Herstellung von Folie mit diesem beanspruchten phospholanmodifizierten Rohstoff zeigen sich folgende Defizite:

Der Rohstoff ist sehr hydrolyseempfindlich und muss sehr gut vorgetrocknet werden. Beim Trocknen des Rohstoffes mit Trocknern, die dem Stand der Technik entsprechen, verklebt der Rohstoff, so dass nur unter schwierigsten Bedingungen eine Folie herstellbar ist.

Die unter extremen, unwirtschaftlichen Bedingungen hergestellten Folien verspröden bei Temperaturbelastungen, d. h. die mechanischen Eigenschaften gehen aufgrund der regelrechten Versprödung stark zurück, so dass die Folie unbrauchbar ist. Bereits nach 48 Stunden Temperaturbelastung tritt diese Versprödung auf.

Aufgabe der vorliegenden Erfindung war es, eine weiße, flammhemmend ausgerüstete, thermoformbare, orientierte Folie mit einer Dicke von 10 - 350 µm bereitzustellen, die neben einer wirtschaftlichen Herstellung, einer guten Verstreckbarkeit bzw. Thermoformbarkeit, guten mechanischen sowie optischen Eigenschaften, vor allem eine flammhemmende Wirkung und keine Versprödung nach Temperaturbelastung aufweist.

Thermoformbarkeit bedeutet, dass sich die Folie auf handelsüblichen Tiefziehmaschinen ohne unwirtschaftliches Vortrocknen zu komplexen und großflächigen Formkörpern tiefziehen bzw. thermoformen lässt.

Eine flammhemmende Wirkung bedeutet, dass die weiße Folie in einer sogenannten Brandschutzprüfung die Bedingungen nach DIN 4102 Teil 2 und insbesondere die Bedingungen nach DIN 4102 Teil 1 erfüllt und in die Baustoffklasse B 2 und insbesondere B1 der schwer entflammbaren Stoffe eingeordnet werden kann.

Des Weiteren soll die Folie den UL-Test 94 "Vertical Buming Test for Flammability of Plastic Material" bestehen, so dass sie in die Klasse 94 VTM-0 eingestuft werden kann. Das bedeutet, dass die Folie 10 Sekunden nach Wegnahme des Bunsenbrenners nicht mehr brennt, nach 30 Sekunden kein Glühen beobachtet wird und auch kein Abtropfen festgestellt wird.

Zu den guten optischen Eigenschaften zählen beispielsweise eine homogene, streifenfreie Einfärbung, ein hoher Oberflächenglanz (> 15), eine niedrige Lichttransmission (< 70%) sowie eine im Vergleich zur nicht flammschutzausgerüsteten Folie unveränderte Gelbwert.

Zu den guten mechanischen Eigenschaften zählt unter anderem eine hoher E-Modul ($E_{MD}$ > 3200 N/mm$^2$; $E_{TD}$ > 3500 N/mm$^2$) sowie gute Reißfestigkeitswerte (in MD > 100 N/mm$^2$; in TD > 130 N/mm$^2$).

Zu der guten Verstreckbarkeit zählt, dass sich die Folie bei ihrer Herstellung sowohl in Längs- als auch in Querrichtung hervorragend und ohne Abrisse orientieren läßt.

Zu der wirtschaftlichen Herstellung zählt, dass die Rohstoffe bzw. die Rohstoffkomponenten, die zur Herstellung der schwer entflammbaren Folie benötigt werden, mit handelsüblichen Industrietrocknern, wie z.B. Vakuumtrockner, Wirbelschichttrockner, Fließbetttrockner, Festbetttrockner (Schachttrockner), die dem Standard der Technik genügen, getrocknet werden können. Wesentlich ist, dass die Rohstoffe nicht verkleben und nicht thermisch abgebaut werden.

Diese obengenannten Trockner arbeiten bei Temperaturen zwischen 100 und 170 °C, wo die nach dem Stand der Technik hergestellten, flammhemmend ausgerüsteten Rohstoffe die Trockner bzw. Extruder so zusetzen, dass die verkohlte Masse herausgebrochen werden muss, so dass keine Folienherstellung möglich ist.

Bei dem am schonensten trocknenden Vakuumtrockner durchläuft der Rohstoff einen Temperaturbereich von ca. 30 °C bis 130 °C bei einem Vakuum von 50 mbar. Danach ist ein sog. Nachtrocknen in einem Hopper bei Temperaturen von 100 - 130 °C und einer Verweilzeit von 3 bis 6 Stunden erforderlich. Selbst hier verkleben die nach dem Stand der Technik hergestellten, flammhemmend ausgerüsteten Rohstoffe extrem.

Keine Versprödungen bei kurzer Temperaturbelastung bedeutet, dass die Folie nach 100 Stunden Tempervorgang bei 100 °C in einem Umluftofen keine Versprödung und keine schlechten mechanischen Eigenschaften aufweist.

Gelöst wird diese Aufgabe durch eine weiße, thermoformbare Folie mit einer Dicke im Bereich 10 µm bis 350

μm, die als Hauptbestandteil einen kristallisierbaren Thermoplasten enthält und dadurch gekennzeichnet ist, dass die Folie mindestens ein Weißpigment und mindestens ein Flammschutzmittel enthält, wobei das Weißpigment zweckmäßigerweise und das Flammschutzmittel erfindungsgemäß über die Masterbatch-Technologie direkt bei der Folienherstellung zudosiert wird.

Die Thermoformbarkeit wird dadurch erreicht, dass der Thermoplast einen DEG-Gehalt von >1,3 Gew.-% und/oder einen PEG-Gehalt von >1,3 Gew.-% hat.

Die weiße Folie enthält als Hauptbestandteil einen kristallisierbaren Thermoplasten. Geeignete kristallisierbare bzw. teilkristalline Thermoplasten sind beispielsweise Polyethylenterephthalat, Polybutylenterephthalat, Polyethylennaphthalat, wobei Polyethylenterephthalat bevorzugt ist.

Erfindungswesentlich ist, dass der kristallisierbare Thermoplast ein Diethylenglykolgehalt von ≥1,0 Gew.%, vorzugsweise ≥1,2 Gew.%, insbesondere ≥1,3 Gew.% und/oder ein Polyethylenglykolgehalt von ≥1,0 Gew.%, vorzugsweise ≥1,2 Gew.%, insbesondere ≥1,3 Gew.% und/oder ein Isophthalsäuregehalt von 3 Gew.-% bis 10 Gew.-% aufweist.

Erfindungsgemäß versteht man unter kristallisierbaren Thermoplasten kristallisierbare Homopolymere, kristallisierbare Copolymere, kristallisierbare Compounds (Mischung), kristallisierbares Recyklat und andere Variationen von kristallisierbaren Thermoplasten.

Die weiße, flammhemmend ausgerüstete, thermoformbare Folie kann sowohl einschichtig als auch mehrschichtig sein. Die Folie kann ebenfalls mit diversen Copolyestern oder Haftvermittlern beschichtet sein.

Die Folie gemäß der Erfindung enthält mindestens ein Flammschutzmittel, das über die sogenannte Masterbatch-Technologie direkt bei der Folienherstellung zudosiert wird, wobei die Konzentration des Flammschutzmittels im Bereich von 0,5 bis 30,0 Gew.-%, vorzugsweise von 1,0 bis 20,0 Gew.-%, bezogen auf das Gewicht der Schicht des kristallisierbaren Thermoplasten, liegt. Bei der Herstellung des Masterbatchs wird im allgemeinen ein Verhältnis von Flammschutzmittel zu Thermoplast im Bereich von 60 zu 40 Gew.-% bis 10 zu 90 Gew.-% eingehalten.

Zu den typischen Flammschutzmitteln gehören Bromverbindungen, Chlorparaffine und andere Chlorverbindungen, Antimontrioxid, Aluminiumtrihydrate , wobei die Halogenverbindungen aufgrund der entstehenden halogenhaltigen Nebenprodukte nachteilig sind. Des Weiteren ist die geringe Lichtbeständigkeit einer damit ausgerüsteten Folie neben der Entwicklung von Halogenwasserstoffen im Brandfall extrem nachteilig.

Geeignete Flammschutzmitteln, die gemäß der Erfindung eingesetzt werden, sind beispielsweise organische Phosphorverbindungen wie Carboxyphosphinsäuren, deren Anhydride und Dimethyl-methylphosphonat. Erfindungswesentlich ist, dass die organische Phosphorverbindung im Thermoplast löslich ist, da andernfalls die geforderten optischen Eigenschaften nicht erfüllt werden.

Da die Flammschutzmittel im allgemeinen eine gewisse Hydrolyseempfindlichkeit aufweisen, kann der zusätzliche Einsatz eines Hydrolysestabilisators sinnvoll sein.

Als Hydrolysestabilisator werden im allgemeinen phenolische Stabilisatoren, Alkali/Erdalkalistearate und/oderAlkali-/Erdalkalicarbonate in Mengen von 0,01 bis 1,0 Gew.-% eingesetzt. Phenolische Stabilisatoren werden in einer Menge von 0,05 bis 0,6 Gew.-%, insbesondere 0,15 bis 0,3 Gew.-% und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertärbutyl-4-Hydroxybenzyl)benzol sind besonders vorteilhaft.

Das Weißpigment wird ebenfalls bevorzugt über die Masterbatch-Technologie zudosiert, kann aber auch direkt beim Rohstoffhersteller eingearbeitet werden. Die Konzentration des Weißpigments liegt zwischen 0,2 Gew.-% und 40 Gew.-%, vorzugsweise zwischen 0,5 Gew.-% und 25 Gew.-%, bezogen auf das Gewicht der Schicht des kristallisierbaren Thermoplasten.

Geeignete Weißpigmente sind vorzugsweise Titandioxid, Bariumsulfat, Calciumcarbonat, Kaolin, Siliciumdioxid, wobei Titandioxid und Bariumsulfat bevorzugt sind.

Die Titandioxidteilchen können aus Anatas oder Rutil bestehen, vorzugsweise überwiegend aus Rutil, welcher im Vergleich zu Anatas eine höhere Deckkraft zeigt.

In bevorzugter Ausführungsform bestehen die Titandioxidteilchen zu mindestens 95 Gew.-% aus Rutil. Sie können nach einem üblichen Verfahren, z. B: nach dem Chlorid- oder dem Sulfat-Prozess, hergestellt werden. Ihre Menge in der Basisschicht beträgt 0,3 - 25 Gew.-%, bezogen auf die Basisschicht, die mittlere Teilchengröße ist relativ klein und liegt vorzugsweise im Bereich von 0,10 bis 0,30 μm.

Durch Titandioxid der beschriebenen Art entstehen innerhalb der Polymermatrix keine Vakuolen während der Folienherstellung.

Die Titandioxidteilchen können einen Überzug aus anorganischen Oxiden besitzen, wie er üblicherweise als Überzug für $TiO_2$-Weißpigment in Papieren oder Anstrichmitteln zur Verbesserung der Lichtechtheit eingesetzt wird.

$TiO_2$ ist bekanntlich fotoaktiv. Bei Einwirkung von UV-Strahlen bilden sich freie Radikale auf der Oberfläche der Partikel. Diese freien Radikale können zu den filmbildenden Polymeren wandern, was zu Abbaureaktionen und Vergilbung führt. Um dies zu verhindern, werden die Partikel mit oxidischen Materialien beschichtet. Zu den besonders geeigneten Oxiden gehören die Oxide von Aluminium, Silicium, Zink oder Magnesium oder Mischungen aus zwei oder

mehreren dieser Verbindungen. $TiO_2$-Partikel mit einem Überzug aus mehreren dieser Verbindungen werden z. B. in der EP-A-0 044 515 und EP-A-0 078 633 beschrieben. Weiterhin kann der Überzug organische Verbindungen mit polaren und unpolaren Gruppen enthalten. Die organischen Verbindungen müssen bei der Herstellung der Folie durch Extrusion der Polymerschmelze ausreichend thermostabil sein. Polare Gruppen sind beispielsweise -OH; - OR; -COOX; (X = R, H oder Na, R = Alkyl mit 1 - 34 C-Atomen). Bevorzugte organische Verbindungen sind Alkanole und Fettsäuren mit 8 - 30 C-Atomen in der Alkylgruppe, insbesondere Fettsäuren und primäre n-Alkanole mit 12 - 24 C-Atomen, sowie Polydiorganosiloxane und/oder Polyorganhydrogensiloxanewie z. B. Polydimethylsiloxan und Polymethylhydrogensiloxan.

Der Überzug aus Titandioxidteilchen besteht gewöhnlich aus 1 bis 12, insbesondere 2 bis 6 g anorganischer Oxide und 0,5 bis 3, insbesondere 0,7 bis 1,5 g organischer Verbindung, bezogen auf 100 g Titandioxidteilchen. Der Überzug wird auf die Teilchen in wässriger Suspension aufgebracht. Die anorganischen Oxide werden aus wasserlöslichen Verbindungen, z. B. Alkali-, insbesondere Natriumnitrat, Natriumsilikat (Wasserglas) oder Kieselsäure in der wässrigen Suspension ausgefällt.

Unter anorganischen Oxiden wie $Al_2O_3$ oder $SiO_2$ sind auch die Hydroxide oder deren verschiedenen Entwässerungsstufen wie z. B. Oxidhydrat zu verstehen, ohne dass man deren genaue Zusammensetzung und Struktur erkennt. Auf das $TiO_2$-Pigment werden nach dem Glühen und Mahlen in wässriger Suspension die Oxidhydrate z. B. des Aluminiums und/oder Silicium gefällt, die Pigmente dann gewaschen und getrocknet. Diese Ausfällung kann somit direkt in einer Suspension geschehen, wie sie im Herstellungsprozess nach der Glühung und der sich anschließenden Nassmahlung anfällt. Die Ausfällung der Oxide und/oder Oxidhydrate der jeweiligen Metalle erfolgt aus den wasserlöslichen Metallsalzen im bekannten pH-Bereich, für das Aluminium wird beispielsweise Aluminiumsulfat in wässriger Lösung (pH kleiner 4) eingesetzt und durch Zugabe von wässriger Ammoniaklösung oder Natronlauge im pH-Bereich zwischen 5 und 9, vorzugsweise zwischen 7 und 8,5, das Oxidhydrat gefällt. Geht man von einer Wasserglas- oder Alkalialuminatlösung aus, sollte der pH-Wert der vorgelegten $TiO_2$-Suspension im stark alkalischen Bereich (pH größer 8) liegen. Die Ausfällung erfolgt dann durch Zugabe von Mineralsäure wie Schwefelsäure im pH-Bereich 5 bis 8. Nach der Ausfällung der Metalloxide wird die Suspension noch 15 min bis etwa 2 Stunden gerührt, wobei die ausgefällten Schichten eine Alterung erfahren. Das beschichtete Produkt wird von der wässrigen Dispersion abgetrennt und nach dem Waschen bei erhöhter Temperatur, insbesondere bei 70 bis 100 °C, getrocknet.

Es war mehr als überraschend, dass mittels Masterbatch-Technologie, einer geeigneten Vortrocknung und/oder Vorkristallisation und gegebenenfalls Einsatz von geringen Mengen eines Hydrolysestabilisators eine schwerentflammbare und thermoformbare Folie mit dem geforderten Eigenschaftsprofil wirtschaftlich und ohne Verklebung im Trockner herstellbar ist und dass die Folie nach Temperaturbelastung nicht versprödet und beim Knicken nicht bricht.

Sehr überraschend war, dass bei diesem hervorragenden Resultat und dem geforderten Flammschutz sowie der Thermoformbarkeit

- der Gelbwert der Folie im Vergleich zu einer nicht mit Flammschutzmittel ausgerüsteten Folie im Rahmen der Meßgenauigkeit nicht negativ beeinflusst ist;
- keine Ausgasungen, keine Düsenablagerungen, keine Rahmenausdampfungen auftreten, wodurch die Folie eine exzellente Optik aufweist und ein ausgezeichnetes Profil und eine hervorragende Planlage hat;
- sich die schwerentflammbare Folie durch einen hervorragende Streckbarkeit auszeichnet, so dass sie verfahrenssicher und stabil auf high speed film lines bis zu Geschwindigkeiten von 420m/min produktionssicherhergestellt werden kann.

Damit ist eine solche Folie auch wirtschaftlich rentabel.

Es war ebenfalls überraschend, dass sich die Folien durch ein im Vergleich zum Standardthermoplasten höheren Diethylenglykolgehalt und/oder Polyethylenglykolgehalt und/oder IPA-Gehalt wirtschaftlich auf handelsüblichen Tiefziehanlagen thermoformen lassen und eine hervorragende Detailwiedergabe liefern.

Des Weiteren ist sehr überraschend, dass auch das aus den Folien bzw. den Formkörpern erzeugte Regenerat wieder einsetzbar ist, ohne den Gelbwert der Folie negativ zu beeinflussen.

In einer besonders bevorzugten Ausführungsform enthält die erfindungsgemäße, weiße, schwerentflammbare, thermoformbare Folie als Hauptbestandteil ein kristallisierbares Polyethylenterephthalat mit einem einen Diethylenglykolgehalt von >1,3 Gew.% und/oder einen Polyethylenglykolgehalt von >1,3 Gew.%, 1 Gew.-% bis 20 Gew.-% einer im Polyethylenterephthalat löslichen organischen Phosphorverbindung als Flammschutzmittel sowie 0,5 Gew.-% bis 25 Gew.-% Titandioxid mit einem Teilchendurchmesser von vorzugsweise 0,10 bis 0,50 µm, wobei ein Titandioxid vom Rutil-Typ bevorzugt wird. Anstelle von Titandioxid kann auch Bariumsulfat mit einem Teilchendurchmesser von 0,20 bis 1,20 µm als Weißpigment eingesetzt werden, wobei die Konzentration zwischen 1,0 Gew.% und 25 Gew.-% liegt. In einer bevorzugten Ausführungsform können auch Mischungen dieser Weißpigmente oder eine Mischung von einem dieser Weißpigmente mit einem anderen eingesetzt werden.

Die weiße, flammhemmend ausgerüstete, thermoformbare Folie hat folgendes Eigenschaftsprofil:

Der Oberflächenglanz, gemessen nach DIN 67530 (Messwinkel 20°) ist größer als 15, vorzugsweise größer als 20.

Die Lichttransmission (Transparenz), gemessen nach ASTM D 1003, ist kleiner als 70 %, vorzugsweise kleiner als 60 %. Die Einfärbung ist homogen und streifenfrei über die Lauflänge und die Folienbreite.

Der E-Modul (ISO 527-1-2) in Längsrichtung liegt bei größer 3200 N/mm$^2$, vorzugsweise bei größer 3600 N/mm$^2$. Der E-Modul (ISO 527-1-2) in Querrichtung liegt bei größer 3500 N/mm$^2$, vorzugsweise bei größer 3800 N/mm$^2$.

Die Standardviskosität SV (DCE) des Polyethylenterephthalates, gemessen in Dichloressigsäure nach DIN 53728, liegt zwischen 600 und 1000, vorzugsweise zwischen 700 und 900.

Die weiße Polyethylenterephtalat-Folie, die mindestens ein Flammschutzmittel und ein Weißpigment enthält, kann sowohl einschichtig als auch mehrschichtig sein.

In der mehrschichtigen Ausführungsform ist die Folie aus mindestes einer Kernschicht und mindestens einer Deckschicht aufgebaut, wobei insbesondere ein dreischichtiger A-B-A oder A-B-C Aufbau bevorzugt ist.

Für diese Ausführungsform ist es wesentlich, dass das Polyethylenterephthalat der Kernschicht eine ähnliche Standardviskosität und einen ähnlichen DEG-Gehalt und/oder PEG-Gehalt besitzt, wie das Polyethylenterephthalat der Deckschicht (en), die an die Kernschicht angrenzt (angrenzen).

In einer besonderen Ausführungsform können die Deckschichten auch aus einem Polyethylennaphthalat - Homopolymeren oder aus einem Polyethylentherephthalat-Polyethylennaphthalat Copolymeren oder einem Compound bestehen.

In dieser Ausführungsform haben die Thermoplaste der Deckschichten ebenfalls ähnliche Standardviskositäten und einen ähnlichen DEG-Gehalt und/oder PEG-Gehalt wie das Polyethylentherephthalat der Kernschicht.

In der mehrschichtigen Ausführungsform ist der Flammschutz und das Weißpigment vorzugsweise in der Kernschicht enthalten. Jedoch können nach Bedarf auch die Deckschichten mit Flammschutzmittel und/oder Weißpigment ausgerüstet sein.

Anders als in der einschichtigen Ausführungsform bezieht sich hier die Konzentration des Flammschutzmittels und des Weißpigmentes auf das Gewicht der Thermoplasten in der ausgerüsteten Schicht.

Ganz überraschend haben Brandschutzversuche nach DIN 4102 und dem UL-Test gezeigt, dass es im Falle einer dreischichtigen Folie durchaus ausreichend ist, die 0,5 bis 2 μm dicken Deckschichten mit Flammschutzmittel auszurüsten, um eine verbesserte Flammhemmung zu erreichen. Bei Bedarf und bei hohen Brandschutzanforderungen kann auch die Kernschicht mit Flammschutzmittel ausgerüstet sein, d. h. eine sogenannte Grundausrüstung beinhalten.

Dadurch werden die mit der bekannten Koextrusionstechnologie hergestellten schwer entflammbaren, bevorzugt mehrschichtigen Folien im Vergleich zu den komplett in hohen Konzentrationen ausgerüsteten Monofolien wirtschaftlich interessant, da deutlich weniger Flammschutzmittel benötigt wird.

Die Folie kann auch mindestens einseitig mit einer kratzfesten Beschichtung, mit einem Copolyester oder mit einem Haftvermittler versehen sein.

Messungen ergaben, dass die erfindungsgemäße Folie sowie daraus hergestelle Formkörper bei Temperaturbelastungen von 100°C übereinen längeren Zeitraum nicht verspröden. Dieses Resultat ist auf die synergistische Wirkung von geeigneter Vorkristallisation, Vortrocknung und Masterbatch-Technologie zurückzuführen.

Des Weiteren sind die erfindungsgemäße Folie sowie daraus hergestelle Formkörper ohne Umweltbelastung und ohne Verlust der mechanischen Eigenschaften problemlos rezyklierbar, wodurch sie sich beispielsweise für die Verwendung als kurzlebige Werbeschilder, beim Messebau und für andere Werbeartikel, wo Brandschutz und Thermoformbarkeit gewünscht wird eignet.

Überraschenderweise erfüllen schon erfindungsgemäße Folien im Dickenbereich 10 - 350 μm die Baustoffklassen B2 und B1 nach DIN 4102 und dem UL-Test 94.

Die Folie läßt sich ohne Vortrocknen thermoformen, so dass komplexe Formkörper daraus hergestellt werden können.

Der Thermoformprozess umfaßt in der Regel die Schritte Vortrocknen, Aufheizen, Formen, Abkühlen, Entformen, Tempern. Beim Thermoformprozess wurde festgestellt, dass sich die erfindungsgemäßen Folien ohne vorheriges Vortrocknen überraschenderweise tiefziehen lassen. Dieser Vorteil im Vergleich zu tiefziehfähigen Polycarbonat- oder Polymethacrylat-Folien, bei denen Vortrocknungszeiten von 10 - 15 Stunden, je nach Dicke bei Temperaturen von 100 °C bis 120 °C erforderlich sind, reduziert drastisch die Kosten des Umformprozesses.

Für das Thermoformen wurden folgende Verfahrensparameter gefunden:

| Verfahrensschritt | Erfindungsgemäße Folie |
|---|---|
| Vortrocknen | nicht erforderlich |
| Temperatur der Form °C | 100 bis 160 |

(fortgesetzt)

| Verfahrensschritt | Erfindungsgemäße Folie |
|---|---|
| Aufheizzeit | < 5 sec pro 10 µm Foliendicke |
| Folientemperatur beim Verformen °C | 160 bis 220 |

| Möglicher Verstreckfaktor | 1,5 bis 2,0 |
|---|---|
| Detailwiedergabe | gut |
| Schrumpf (Schwindung) % | < 1,5 |

Die Herstellung dererfindungsgemäßen, weißen, schwer entflammbaren, thermoformbaren Folie kann beispielsweise nach dem Extrusionsverfahren in einer Extrusionsstraße erfolgen.

Hierbei wird ein kristallisierbarer Thermoplast in mindestens einem Extruder aufgeschmolzen wird und die erhaltene Polymerschmelze entsprechend der Zusammensetzung der Folienschicht einer Düse oder die erhaltenen Polymerschmelzen entsprechend der Zusammensetzungen der Deck- und Basisschichten einer Mehrschichtdüse zugeführt, aus der Düse auf eine Abkühlwalze extrudiert und die so erhaltene Vorfolie anschließend biaxial verstreckt und hitzefixiert.

Erfindungsgemäß wird das Flammschutzmittel über die Masterbatch-Technologie zugegeben. Das Flammschutzmittel wird in einem Trägermaterial voll dispergiert. Als Trägermaterial kommen der Thermoplast selbst, wie z. B. das Polyethylenterephthalat oder auch andere Polymere, die mit dem Thermoplasten verträglich sind, in Frage.

Der DEG-Gehalt und/oder PEG-Gehalt des Polyethylenterephthalates werden beim Rohstoffhersteller während des Polymerisationsprozesses eingestellt.

Wichtig bei der Masterbatch-Technologie ist, dass die Korngröße und das Schüttgewicht des Masterbatches ähnlich der Korngröße und dem Schüttgewicht des Thermoplasten ist, so dass eine homogene Verteilung und damit eine homogene Schwerentflammbarkeit erfolgen kann.

Die Polyesterfolien können nach bekannten Verfahren aus einem Polyesterrohstoff mit ggf. weiteren Rohstoffen, dem Weißpigment und dem Flammschutzmittel und/oder weiteren üblichen Additiven in üblicher Menge von 0,1 bis max. 30 Gew.-% sowohl als Monofolie als auch als mehrschichtige, ggf. koextrudierte Folien mit gleichen oder unterschiedlich ausgebildeten Oberflächen hergestellt werden, wobei eine Oberfläche beispielsweise pigmentiert ist und die andere Oberfläche kein Pigment enthält. Ebenso können eine oder beide Oberflächen der Folie nach bekannten Verfahren mit einer üblichen funktionalen Beschichtung versehen werden.

Erfindungswesentlich ist, dass das Masterbatch, welches das Flammschutzmittel und gegebenenfalls den Hydrolysestabilisator enthält, vorkristallisiert bzw. vorgetrocknet wird. Diese Vortrocknung beinhaltet ein gradielles Erhitzen des Masterbatches unter reduziertem Druck (20 bis 80 mbar, vorzugsweise 30 bis 60 mbar, insbesondere 40 bis 50 mbar) und unter Rühren und gegebenenfalls ein Nachtrocknen bei konstanter, erhöhter Temperatur ebenfalls unter reduziertem Druck. Das Masterbatch wird vorzugsweise bei Raumtemperatur aus einem Dosierbehälter in der gewünschten Abmischung zusammen mit den Polymeren der Basis- und/oder Deckschichten und ggf. anderen Rohstoffkomponenten chargenweise in einem Vakuumtrockner, der im Laufe der Trocken- bzw. Verweilzeit ein Temperaturspektrum von 10 °C bis 160 °C, vorzugsweise 20 °C bis 150 °C, insbesondere 30 °C bis 130 °C durchläuft, gefüllt. Während der ca. 6-stündigen, vorzugsweise 5-stündigen, insbesondere 4-stündigen Verweilzeit wird die Rohstoffmischung mit 10 bis 70 Upm, vorzugsweise 15 bis 65 Upm, insbesondere 20 bis 60 Upm gerührt. Das so vorkristallisierte bzw. vorgetrocknete Rohstoffgem isch wird in einem nachgeschalteten ebenfalls evakuierten Behälter bei 90 bis 180 °C, vorzugsweise 100 °C bis 170 °C, insbesondere 110 °C bis 160 °C für 2 bis 8 Stunden, vorzugsweise 3 bis 7 Stunden, insbesondere 4 bis 6 Stunden nachgetrocknet.

Bei dem bevorzugtem Extrusionsverfahren zur Herstellung der Polyesterfolie wird das aufgeschmolzene Polyestermaterial durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und Längsrichtung bzw. in Längs-, in Quer- und nochmals und Längsrichtung und/oder Querrichtung gestreckt. Die Strecktemperaturen liegen im allgemeinen bei $T_G$ + 10 °C bis $T_G$ + 60 °C ($T_G$ = Glastemperatur), das Streckverhältnis der Längsstreckung liegt üblicherweise bei 2 bis 6, insbesondere bei 3 bis 4,5, das der Querstreckung liegt bei 2 bis 5, insbesondere bei 3 bis 4,5 und das der ggf. durchgeführten zweiten Längs- und Querstreckung liegt bei 1,1 bis 5. Die erste Längsstreckung kann ggf. gleichzeitig mit der Querstreckung (Simultanstreckung) durchgeführt werden. Anschließend folgt die Thermofixierung der Folie bei Ofentemperaturen von 180 bis 260 °C, insbesondere bei 220 bis 250 °C. Anschließend wird die Folie abgekühlt und gewickelt.

Durch die überraschende Kombination ausgezeichneter Eigenschaften eignet sich die erfindungsgemäße Folie hervorragend für eine Vielzahl verschiedener Anwendungen, beispielsweise für Innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium, für Gewächshäuser, Überdachungen, Außenverkleidungen, Abdeckungen, Anwendungen im Bausektor und Lichtwerbeprofile, Schattenmatten, Elektroanwendungen.

Aufgrund der Thermoformbarkeit eignet sich die erfindungsgemäße Folie zum Thermoformen beliebiger Formkörper für Innen- und Außenanwendungen.

Die Erfindung wird im folgenden anhand von Ausführungsbeispielen näher erläutert.

Die Messungen der einzelnen Eigenschaften erfolgt dabei gemäß der folgenden Normen bzw. Verfahren.

**Meßmethoden**

**DEG-Gehalt/PEG-Gehalt/IPA-Gehalt**

Der DEG-/PEG-/IPA-Gehalt wird gaschromatografisch nach Verseifung in methanolischer KOH und Neutralisation mit wässrigem HCl bestimmt.

**Oberflächenglanz**

Der Oberflächenglanz wir bei einem Messwinkel von 20° nach DIN 67530 gemessen.

**Lichttransmission**

Unter der Lichttransmission ist das Verhältnis des insgesamt durchgelassenen Lichtes zur einfallenden Lichtmenge zu verstehen.

Die Lichttransmission wird mit dem Messgerät "®HAZEGARD plus" nach ASTM D 1003 gemessen.

**T**rübung

Trübung ist der prozentuale Anteil des durchgelassenen Lichtes, der vom eingestrahlten Lichtbündel im Mittel um mehr als 2,5° abweicht. Die Bildschärfe wird unter einem Winkel kleiner 2,5° ermittelt.

Die Trübung wird mit dem Messgerät "HAZEGARD plus" nach ASTM D 1003.

**Oberflächendefekte**

Die Oberflächendefekte, wie z. B. Stippen, Orangenhaut, Blasen, Risse, Versprödungen usw., werden visuell bestimmt.

**Mechanische Eigenschaften**

Der E-Modul und die Reißfestigkeit werden in Längs- und Querrichtung nach ISO 527-1-2 gemessen.

**SV (DCE), IV (DVE)**

Die Standardviskosität SV (DCE) wird angelehnt an DIN 53726 in Dichloressigsäure gemessen.

Die intrinsische Viskosität (IV) berechnet sich wie folgt aus der Standardviskosität

$$IV\ (DCE) = 6{,}67 \cdot 10^{-4} SV \cdot (DCE) + 0{,}118$$

**Brandverhalten**

Das Brandverhalten wird nach DIN 4102 Teil 2, Baustoffklasse B2 und nach DIN 4102 Teil 1, Baustoffklasse B1 sowie nach dem UL-Test 94 ermittelt.

**Gelbwert**

Der Gelbwert (YID) ist die Abweichung von der Farblosigkeit in Richtung "Gelb" und wird gemäß DIN 6167 gemessen. Gelbwert (YID) von < 5 sind visuell nicht sichtbar.

**Beispiele**

**Beispiel 1**

Es wird eine 50 μm dicke, weiße Monofolie hergestellt, die als Hauptbestandteil Polyethylenterephthalat (PET), 7,0 Gew.-% Titandioxid und 4 Gew.-% Flammschutzmittel enthält.
Das Titandioxid ist vom Rutiltyp, hat einen mittleren Teilchendurchmesser von 0,20 μm und ist mit $Al_2O_3$ gecoatet.
Bei dem Flammschutzmittel handelt es sich um die organische, im PET lösliche Phosphorverbindung Dimethyl-Methylphosphonat (®Amgard P1045) der Fa. Albright & Wilson.
Zwecks homogener Verteilung wird das Titandioxid direkt beim Rohstoffhersteller in das PET eingearbeitet.
Das Flammschutzmittel wird in Form eines Masterbatches zudosiert. Das Masterbatch setzt sich aus 20 Gew.-% Flammschutzmittel und 80 Gew.-% PET zusammen und hat ein Schüttgewicht von 750 kg/m$^3$.
Das PET, aus dem die Folie hergestellt wird und das PET, das zur Masterbatchherstellung benutzt werden, haben eine Standardviskosität SV (DCE) von 810, was einer intrinsischen Viskosität IV (DCE) von 0,658 dllg entspricht und einen DEG-Gehalt von 1,6 Gew.% und einen PEG-Gehalt von 1,7 Gew.%.
50 Gew.-% des Polyethylenterephthalates, 30 Gew.-% Polyethylenterephthalat-Rezyklat und 20 Gew.-% des Masterbatches werden bei Raumtemperatur aus separaten Dosierbehältern in einem Vakuumtrockner gefüllt, der von dem Einfüllzeitpunkt bis zum Ende der Verweilzeit ein Temperaturspektrum von 25 °C bis 130 °C durchläuft. Während der ca. 4-stündigen Verweilzeit wird das Rohstoffgemisch mit 61 Upm gerührt.
Das vorkristallisierte bzw. vorgetrocknete Rohstoffgemisch wird in dem nachgeschalteten, ebenfalls unter Vakuum stehenden Hopper bei 140 °C 4 Stunden nachgetrocknet. Anschließend wird mit dem beschriebenen Extrusionsverfahren die 50 μm Monofolie hergestellt.
Die einzelnen Verfahrensschritte waren:

| Längsstreckung | Temperatur | 85-135 °C |
|---|---|---|
| | Längsstreckverhältnis | 4,0 : 1 |
| Querstreckung | Temperatur | 85-135 °C |
| | Querstreckverhältnis | 4,0 : 1 |
| Fixierung | Temperatur. | 230 °C |

Die hergestellte weiße PET-Folie hat folgendes Eigenschaftsprofil:

| Dicke | 50 μm |
|---|---|
| Oberflächenglanz 1. Seite | 72 |
| (Messwinkel 20°) 2. Seite | 68 |
| Lichttransmission | 28 % |
| Oberflächendefekte pro m$^2$ | keine |
| E-Modul längs | 3800 N/mm$^2$ |
| E-Modul quer | 4900 N/mm$^2$ |
| Reißfestigkeit längs | 140 N/mm$^2$ |
| Reißfestigkeit quer | 230 N/mm$^2$ |
| Gelbwert (YID) | 48 |
| Einfärbung | homogen |

Die Folie erfüllt nach DIN 4102 Teil 2 und Teil 1 die Baustoffklassen B2 und B1. Die Folie besteht den UL-Test 94.
Nach 200 Stunden Tempern bei 100 °C im Umlufttrocknerschrank sind die mechanischen Eigenschaften unverändert. Die Folie zeigt keinerlei Versprödungserscheinungen.

**Beispiel 2**

Nach der Koextrusionstechnologie wird eine 17 μm dicke mehrschichtige PET-Folie mit der Schichtreihenfolge A-B-A hergestellt, wobei B die Kernschicht und A die Deckschichten repräsentieren. Die Kernschicht ist 15 μm dick und die beiden Deckschichten, die die Kernschicht überziehen, sind jeweils 1 μm dick.
Das für die Kernschicht B eingesetzte Polyethylenterephthalat ist identisch mit dem aus Beispiel 1, enthält also 7 Gew.-% Titandioxid und hat einen DEG-Gehalt von 1,6 Gew.% und einen PEG-Gehalt von 1,7 Gew.%.

Die Kernschicht enthält außerdem 5 Gew.-% Flammschutzmittel aus Beispiel 1, wobei das Flammschutzmittel in Form eines Masterbatches zudosiert wird. Das Masterbatch setzt sich aus 25 Gew.-% Flammschutzmittel und 75 Gew.-% PET zusammen.

Das PET der Deckschicht hat eine Standardviskosität SV(DCE) von 810 und ist mit 0,3 Gew.-% Sylobloc (Siliciumdioxid als Antiblockmittel) ausgerüstet. Die Deckschichten enthalten kein Titandioxid und kein Flammschutzmittel.

Für die Kernschicht werden 50 Gew.-% Polyethylenterephthalat, 30 Gew.-% Polyethylenterephthalat-Rezyklat und 20 Gew-% des Masterbatches entsprechend Beispiel 1 vorkristallisiert, vorgetrocknet und nachgetrocknet.

Der Deckschichtrohstoff erfährt keine besondere Trocknung. Mittels Koextrusionstechnologie wird eine 17 μm dicke Folie mit der Schichtreihenfolge A-B-A hergestellt, die folgende Eigenschaften zeigt:

| Schichtaufbau | A-B-A |
|---|---|
| Gesamtdicke | 17 μm |
| Oberflächenglanz 1. Seite | 138 |
| (Messwinkel 20°) 2. Seite | 127 |
| Lichttransmission | 47 % |
| Oberflächendefekte | keine |
| E-Modul längs | 3600 N/mm$^2$ |
| E-Modul quer | 4020 N/mm$^2$ |
| Reißfestigkeit längs | 125 N/mm$^2$ |
| Reißfestigkeit quer | 185 N/mm$^2$ |
| Gelbwert (YID) : | 14,5 |
| Einfärbung : | homogen |

Nach 200 Stunden Tempern bei 100 °C im Umlufttrocknerschrank sind die mechanischen Eigenschaften unverändert. Die Folie zeigt keinerlei Versprödungserscheinungen.

Die Folie erfüllt nach DIN 4102 Teil 2 und Teil 1 die Baustoffklasse B2 und B1. Die Folie besteht den UL-Test 94.

**Beispiel 3**

Entsprechend Beispiel 2 wird eine 20 μm A-B-A-Folie hergestellt, wobei die Kernschicht B 16 μm und die Deckschichten A jeweils 2 μm dick sind.

Die Kernschicht B enthält nur 5 Gew.-% des Flammschutz-Masterbatches aus Beispiel 2.

Die Deckschichten sind identisch mit denen aus Beispiel 2, enthalten aber 20 Gew.-% des Masterbatches, welches in Beispiel 2 nur für die Kernschicht eingesetzt wurde.

Die Rohstoffe und das Masterbatch für die Kernschicht und die Deckschichten werden entsprechend Beispiel 1 vorkristallisiert, vorgetrocknet und nachgetrocknet.

Die mittels Koextrusionstechnologie hergestellt, mehrschichtige 20 μm Folie hat folgendes Eigenschaftsprofil:

| Schichtaufbau | A-B-A |
|---|---|
| Gesamtdicke | 20 μm |
| Oberflächenglanz 1. Seite | 121 |
| (Messwinkel 20°) 2. Seite | 118 |
| Lichttransmission | 42 % |
| Oberflächendefekte | keine |
| E-Modul längs | 3700 N/mm$^2$ |
| E-Modul quer | 4250 N/mm$^2$ |
| Reißfestigkeit längs | 135 N/mm$^2$ |
| Reißfestigkeit quer | 185 N/mm$^2$ |
| Gelbwert (YID) | 13,9 |

Nach 200 Stunden Tempern bei 100 °C im Umlufttrocknerschrank sind die mechanischen Eigenschaften unverändert. Die Folie zeigt keinerlei Versprödungserscheinungen.

Die Folie erfüllt nach DIN 4102 Teil 2 und Teil 1 die Baustoffklassen B2 und B1. Die Folie besteht den UL-Test 94.

**Thermoformbarkeit**

Die Folien aus den Beispielen 1 bis 3 lassen sich auf handelsüblichen Tiefziehmaschinen, z.B. von Fa. Illig, ohne Vortrocknung zu Formkörpem thermoformen. Die Detailwiedergabe der Formkörper ist bei einer homogenen Oberfläche hervorragend.

**Vergleichsbeispiel 1**

Beispiel 2 wird wiederholt. Die Folie wird aber nicht mit Flammschutz-Masterbatch ausgerüstet, d. h. die Folie enthält kein Flammschutzmittel, der DEG-Gehalt beträgt 0,7%, es ist kein PEG enthalten.

Die unausgerüstete Folie hat folgende Eigenschaften:

| | |
|---|---|
| Schichtaufbau | A-B-A |
| Gesamtdicke | 17 μm |
| Oberflächenglanz 1. Seite | 141 |
| (Messwinkel 20°) 2. Seite | 135 |
| Lichttransmission | 49 % |
| Oberflächendefekte | keine |
| E-Modul längs | 4200 N/mM$^2$ |
| E-Modul quer | 4750 N/mm$^2$ |
| Reißfestigkeit längs | 175 N/mm$^2$ |
| Reißfestigkeit quer | 225 N/mm$^2$ |
| Gelbwert (YID) | 12,5 |
| Einfärbung | homogen |

Die unausgerüstete Folie erfüllt die Tests nach DIN 4102 Teil 1 und Teil 2 sowie den UL-Test 94 nicht.

Die Folie ist nur unzureichend thermoformbar.

**Patentansprüche**

1. Weiße, thermoformbare Folie, die als Hauptbestandteil einen kristallisierbaren Thermoplasten enthält, **dadurch gekennzeichnet, dass** sie mindestens ein Weißpigment und mindestens ein Flammschutzmittel enthält, welches im Polyester löslich ist, wobei das Flammschutzmittel und gegebenenfalls das Weißpigment als Masterbatch bei der Folienherstellung direkt zudosiert wird, wobei das Masterbatch durch gradielles Erhitzen unter reduziertem Druck und unter Rühren vorbehandelt wurde.

2. Folie gemäß Anspruch 1, **dadurch gekennzeichnet, dass** der kristallisierbare Thermoplast eine Kristallinität aufweist, die im Bereich von 5 bis 65 % liegt.

3. Folie gemäß den Ansprüchen 1 oder 2, **dadurch gekennzeichnet, dass** der kristallisierbare Thermoplast ausgewählt ist unter Polyethylenterephthalat, Polybutylenterephthalat und einem Polyethylennaphthalat.

4. Folie gemäß Anspruch 3, **dadurch gekennzeichnet, dass** als kristallisierbarer Thermoplast Polyethylenterephthalat verwendet wird.

5. Folie gemäß Anspruch 4, **dadurch gekennzeichnet, dass** das kristallisierbare Polyethylenterephthalat einen Diethylenglykolgehalt von> 1,0 Gew. % und/oder einen Polyethylenglykolgehalt von> 1,0 Gew.% hat.

6. Folie gemäß Anspruch 4 oder 5, **dadurch gekennzeichnet, dass** die Folie Rezyklat enthält.

7. Folie gemäß den Ansprüchen 1 bis 6, **dadurch gekennzeichnet, dass** das Flammschutzmittel ausgewählt wird aus einer oder mehreren organischen Phosphorverbindungen, wobei Dimethyl-Methylphosphonat bevorzugt ist.

**8.** Folie gemäß den Ansprüchen 1 bis 7, **dadurch gekennzeichnet, dass** die Folie 0,5 bis 30,0 Gew.-% Flammschutzmittel enthält.

**9.** Folie gemäß den Ansprüchen 1 bis 8, **dadurch gekennzeichnet, dass** das Weißpigment ausgewählt ist aus einem oder mehreren der Weißpigmente Titandioxid, Bariumsulfat, Calciumcarbonat, Kaolin und Siliciumdioxid.

**10.** Folie gemäß Anspruch 9, **dadurch gekennzeichnet, dass** das Weißpigment Titandioxid ist.

**11.** Folie gemäß den Ansprüchen 1 bis 10, **dadurch gekennzeichnet, dass** das Weißpigment beschichtet ist.

**12.** Folie gemäß den Ansprüchen 1 bis 11, **dadurch gekennzeichnet, dass** das Weißpigment in einer Menge von 0,3 Gew.-% bis 25 Gew.-%, bezogen auf die Basisschicht, in der das Weißpigment enthalten ist, vorhanden ist.

**13.** Folie gemäß den Ansprüchen 1 bis 12, **dadurch gekennzeichnet, dass** das Weißpigment eine mittlere Teilchengröße von 0,10 bis 0,30 µm besitzt.

**14.** Folie gemäß den Ansprüchen 1 bis 13, **dadurch gekennzeichnet, dass** der Oberflächenglanz, gemessen nach DIN 67530 (Messwinkel 20°), größer als 15 ist.

**15.** Folie gemäß den Ansprüchen 1 bis 13, **dadurch gekennzeichnet, dass** die Lichttransmission, gemessen nach ASTM D 1003, kleiner als 70 % beträgt.

**16.** Folie gemäß den Ansprüchen 1 bis 13, **dadurch gekennzeichnet, dass** der E-Modul, gemessen nach ISO 527-1-2, in Längsrichtung größer als 3200 N/mm$^2$ und in Querrichtung größer als 3500 N/mm$^2$ ist.

**17.** Folie gemäß den Ansprüchen 1 bis 16, **dadurch gekennzeichnet, dass** sie einen einschichtigen Aufbau aufweist.

**18.** Folie gemäß den Ansprüchen 1 bis 16, **dadurch gekennzeichnet, dass** die Folie eine mehrschichtige Struktur mit mindestens einer Deckschicht und mindestens einer Kernschicht aufweist.

**19.** Folie gemäß Anspruch 18, wobei die mehrschichtige Struktur mit zwei Deckschichten und einer zwischen den Deckschichten liegende Kernschicht aufweist.

**20.** Folie gemäß den Ansprüchen 18 oder 19, **dadurch gekennzeichnet, dass** mindestens ein Weißpigment in der Basisschicht enthalten ist.

**21.** Folie gemäß den Ansprüchen 18 oder 19, **dadurch gekennzeichnet, dass** mindestens ein Flammschutzmittel in der Basisschicht enthalten ist.

**22.** Verfahren zur Herstellung einer weißen Folie gemäß den Ansprüchen 1 bis 21, **dadurch gekennzeichnet, dass** ein kristallisierbarer Thermoplast in mindestens einem Extruder aufgeschmolzen wird und die erhaltene Polymerschmelze entsprechend der Zusammensetzung der Folienschicht einer Düse oder die erhaltenen Polymerschmelzen entsprechend der Zusammensetzungen der Deck- und Basisschichten einer Mehrschichtdüse zugeführt werden, aus der Düse auf eine Abkühlwalze extrudiert werden und die so erhaltene Vorfolie anschließend biaxial verstreckt und hitzefixiert wird, wobei die Polymerschmelze(n) für die Basisschicht und/oder für die Deckschicht(en) mindestens ein Flammschutzmittel und/oder Weißpigment enthalten.

**23.** Verfahren gemäß Anspruch 22, **dadurch gekennzeichnet, dass** die Zugabe des Flammschutzmittels über die Masterbatch-Technologie durchgeführt wird.

**24.** Verfahren gemäß den Ansprüchen 22 oder 23, **dadurch gekennzeichnet, dass** die Zugabe des Weißpigments über die Masterbatch-Technologie durchgeführt wird.

**25.** Verwendung einer Folie gemäß den Ansprüchen 1 bis 21 als Innenraumverkleidung, als Display, für Schilder, für Schutzverglasungen, im Beleuchtungssektor, im Laden- und Regalbau, als Werbeartikel, Kaschiermedium, für Gewächshäuser, Überdachungen, Außenverkleidungen, Abdeckungen, im Bausektor, als Lichtwerbeprofil, Schattenmatte oder in Elektroanwendungen und für Thermoformanwendungen.

# EP 1 274 776 B1

**Claims**

1. A white, thermoformable film in which the principal constituent present is a crystallizable thermoplastic, wherein the film comprises at least one white pigment and at least one flame retardant which is soluble in the polyester, where the flame retardant and, if desired, the white pigment, is fed directly as a masterbatch during the production of the film, and where the masterbatch was pretreated by gradual heating at subatmospheric pressure and with agitation.

2. The film as claimed in claim 1, wherein the crystallizable thermoplastic has a crystallinity of from 5 to 65%.

3. The film as claimed in claim 1 or 2, wherein the crystallizable thermoplastic has been selected from the group consisting of polyethylene terephthalate, polybutylene terephthalate and polyethylene naphthalate.

4. The film as claimed in claim 3, wherein the crystallizable thermoplastic is polyethylene terephthalate.

5. The film as claimed in claim 4, wherein the crystallizable polyethylene terephthalate has a diethylene glycol content of > 1.0% by weight and/or a polyethylene glycol content of > 1.0% by weight.

6. The film as claimed in claim 4 or 5, wherein the film comprises recycled material.

7. The film as claimed in any of claims 1 to 6, wherein the flame retardant is one or more compounds selected from the group consisting of organic phosphorus compounds, dimethyl methylphosphonate being preferred.

8. The film as claimed in any of claims 1 to 7, wherein the film comprises from 0.5 to 30.0% by weight of flame retardant.

9. The film as claimed in any of claims 1 to 8, wherein the white pigment is one or more white pigments selected from the group consisting of titanium dioxide, barium sulfate, calcium carbonate, kaolin and silicon dioxide.

10. The film as claimed in claim 9, wherein the white pigment is titanium dioxide.

11. The film as claimed in any one of claims 1 to 10, wherein the white pigment has been coated.

12. The film as claimed in any of claims 1 to 11, wherein the amount of white pigment present, based on the base layer in which the white pigment is present, is from 0.3 to 25% by weight.

13. The film as claimed in any of claims 1 to 12, wherein the average particle size of the white pigment is from 0.10 to 0.30 $\mu$m.

14. The film as claimed in any of claims 1 to 13, wherein the surface gloss, measured to DIN 67530 (measurement angle 20°), is above 15.

15. The film as claimed in any of claims 1 to 13, wherein the luminous transmittance, measured to ASTM D 1003, is below 70%.

16. The film as claimed in any of claims 1 to 13, wherein the modulus of elasticity, measured to ISO 527-1-2, in the longitudinal direction is above 3200 N/mm$^2$ and in the transverse direction above 3500 N/mm$^2$.

17. The film as claimed in any of claims 1 to 16, wherein the film has a single-layer structure.

18. The film as claimed in any of claims 1 to 16, wherein the film has a multilayered structure with at least one outer layer and with at least one core layer.

19. The film as claimed in claim 18, wherein the multilayered structure has two outer layers and a core layer lying between the outer layers.

20. The film as claimed in claim 18 or 19, wherein at least one white pigment is present in the base layer.

21. The film as claimed in claim 18 or 19, wherein at least one flame retardant is present in the base layer.

22. A process for producing a white film as claimed in any of claims 1 to 21, which comprises melting a crystallizable thermoplastic in at least one extruder and introducing the resultant polymer melt corresponding to the composition of the film layer into a die, or introducing the resultant polymer melts corresponding to the compositions of the outer and base layers into a coextrusion die, and extruding these from the die onto a chill roll, and then biaxially orienting and heat-setting the resultant prefilm, where at least one flame retardant and/or white pigment is present in the polymer melt(s) for the base layer and/or for the outer layer(s).

23. The process as claimed in claim 22, wherein the flame retardant is added by way of masterbatch technology.

24. The process as claimed in claim 22 or 23, wherein the white pigment is added by way of masterbatch technology.

25. The use of a film as claimed in any of claims 1 to 21 as interior decoration, as a display, for placards, for protective glazing, in the lighting sector, in the fitting out of shops or of stores, as a promotional requisite, laminating medium, for greenhouses, roofing systems, exterior cladding, protective coverings, in the construction sector, as an illuminated advertising profile, a blind, or in electrical applications, and for thermo applications.

## Revendications

1. Film blanc thermoformable qui contient comme composant principal une matière thermoplastique cristallisable, **caractérisé en ce qu'**il contient au moins un pigment blanc et au moins un agent ignifuge qui est soluble dans le polyester, l'agent ignifuge et éventuellement le pigment blanc étant ajouté(s) directement par addition dosée en tant que mélange-maître (*masterbatch*) lors de la fabrication du film, le mélange-maître ayant été prétraité par chauffage graduel sous pression réduite et sous agitation.

2. Film selon la revendication 1, **caractérisé en ce que** la matière thermoplastique cristallisable présente une cristallinité qui se situe dans la plage allant de 5 à 65 %.

3. Film selon la revendication 1 ou 2, **caractérisé en ce que** la matière thermoplastique cristallisable est choisie parmi le poly(éthylène téréphtalate), le poly(butylène téréphtalate) et un poly(éthylène naphtalate).

4. Film selon la revendication 3, **caractérisé en ce que** du poly(éthylène téréphtalate) est utilisé en tant que matière thermoplastique cristallisable.

5. Film selon la revendication 4, **caractérisé en ce que** le poly(éthylène téréphtalate) cristallisable a une teneur en diéthylèneglycol de > 1,0 % en poids et/ou une teneur en polyéthylèneglycol de > 1,0 % en poids.

6. Film selon la revendication 4 ou 5, **caractérisé en ce que** le film contient un produit recyclé.

7. Film selon l'une quelconque des revendications 1 à 6, **caractérisé en ce que** l'agent ignifuge est choisi parmi un ou plusieurs composés phosphorés organiques, le méthylphosphonate de diméthyle étant préféré.

8. Film selon l'une quelconque des revendications 1 à 7, **caractérisé en ce que** le film contient de 0,5 à 30,0 % en poids d'agent ignifuge.

9. Film selon l'une quelconque des revendications 1 à 8, **caractérisé en ce que** le pigment blanc est choisi parmi un ou plusieurs des pigments blancs dioxyde de titane, sulfate de baryum, carbonate de calcium, kaolin et dioxyde de silicium.

10. Film selon la revendication 9, **caractérisé en ce que** le pigment blanc est le dioxyde de titane.

11. Film selon l'une quelconque des revendications 1 à 10, **caractérisé en ce que** le pigment blanc est enrobé.

12. Film selon l'une quelconque des revendications 1 à 11, **caractérisé en ce que** le pigment blanc est présent en une proportion de 0,3 % en poids à 25 % en poids, par rapport à la couche de base dans laquelle est contenu le pigment blanc.

13. Film selon l'une quelconque des revendications 1 à 12, **caractérisé en ce que** le pigment blanc a une taille moyenne de particule de 0,10 à 0,30 µm.

14. Film selon l'une quelconque des revendications 1 à 13, **caractérisé en ce que** la brillance superficielle, mesurée selon la norme DIN 67530 (angle de mesure 20°) est supérieure à 15.

15. Film selon l'une quelconque des revendications 1 à 13, **caractérisé en ce que** la transmission de la lumière, mesurée selon ASTM D 1003, est inférieure à 70 %.

16. Film selon l'une quelconque des revendications 1 à 13, **caractérisé en ce que** le module d'élasticité, mesuré selon ISO 527-1-2, dans le sens longitudinal, est supérieur à 3 200 N/mm$^2$ et dans le sens transversal est supérieure à 3 500 N/mm$^2$.

17. Film selon l'une quelconque des revendications 1 à 16, **caractérisé en ce qu'**il présente une structure monocouche.

18. Film selon l'une quelconque des revendications 1 à 16, **caractérisé en ce que** le film présente une structure multicouche comportant au moins une couche de recouvrement et au moins une couche de coeur.

19. Film selon la revendication 18, dans lequel la structure multicouche comporte deux couches de recouvrement et une couche de coeur située entre les couches de recouvrement.

20. Film selon la revendication 18 ou 19, **caractérisé en ce qu'**au moins un pigment blanc est contenu dans la couche de base.

21. Film selon la revendication 18 ou 19, **caractérisé en ce qu'**au moins un agent ignifuge est contenu dans la couche de base.

22. Procédé pour la fabrication d'un film blanc selon les revendications 1 à 21, **caractérisé en ce qu'**une matière thermoplastique cristallisable est fondue dans au moins une extrudeuse et la masse fondue de polymère obtenue correspondant à la composition de la couche du film est envoyée à une filière ou les masses fondues de polymères obtenues correspondant aux compositions des couches de base et de recouvrement sont envoyées à une filière multicouche, celle(s)-ci est(sont) extrudée(s) à la sortie de la filière sur un cylindre refroidisseur et le pré-film ainsi obtenu est ensuite étiré biaxialement et thermofixé, la(les) masse(s) fondue(s) de polymère(s) pour la couche de base et/ou pour la(les) couche(s) de recouvrement contenant au moins un agent ignifuge et/ou un pigment blanc.

23. Procédé selon la revendication 22, **caractérisé en ce que** l'addition de l'agent ignifuge est effectuée par la technique de mélange-maître.

24. Procédé selon la revendication 22 ou 23, **caractérisé en ce que** l'addition du pigment blanc est effectuée par la technique de mélange-maître.

25. Utilisation d'un film selon les revendications 1 à 21, comme revêtement d'intérieur, comme afficheur, pour des panneaux, pour des vitrages de protection, dans le secteur de l'éclairage, dans la construction de magasins et d'étagères, comme article publicitaire, matériau de contre-collage, pour des serres, des toitures, des revêtements d'extérieur, des couvertures, dans le secteur du bâtiment, comme profilé pour publicité lumineuse, mat d'ombrage ou dans des applications électriques et pour des applications de thermoformage.